# EUROPEAN PATENT APPLICATION

(11) **EP 4 209 805 A1**
(43) Date of publication of application: **12.07.2023**
(21) Application number: 22207869.3
(22) Date of filing: 16.11.2022
(51) Int. Cl.: G01S 13/86

(54) **RADAR MULTIPATH FILTER WITH TRACK PRIORS**

(30) Priority: 11.01.2022 US 202217572695
(71) Applicant: GM Cruise Holdings LLC, San Francisco, CA 94107 (US)
(72) Inventor: ZHANG, Weizhe, San Francisco (US); WANG, Shaogang, San Francisco (US)
(74) Representative: Barton, Russell Glen

(57) **Abstract**

The present disclosure is directed to processing data associated with a non-radar type sensing device to identify data points associated with a radar type sensing device that are likely secondary radar reflections such that a processor of a sensing apparatus can direct processing resources to processing radar data that are associated with primary radar reflections. The receipt of secondary radar reflections may cause a processor of a sensing apparatus to identify that an object is located at a location when there is no object in that location. Because of this, methods and apparatus of the present disclosure identify and avoid processing radar data that are likely to be associated with a object that does not exist. Eliminating false radar data, therefore, can prevent a processor of a sensing apparats from performing unnecessary processing tasks and can help prevent that processor from making false determinations.

## Description

### BACKGROUND

### 1. Technical Field

The present disclosure is generally related to evaluating sensor data from different perspectives. More specifically, the present disclosure is directed to solutions for identifying and disregarding false or incorrect sensor data.

### 2. Introduction

Autonomous vehicles (AVs) are vehicles having computers and control systems that perform driving and navigation tasks that are conventionally performed by a human driver. As AV technologies continue to advance, they will be increasingly used to improve transportation efficiency and safety. As such, AVs will need to perform many of the functions that are conventionally performed by human drivers, such as performing navigation and routing tasks necessary to provide a safe and efficient transportation. Such tasks may require the collection and processing of large quantities of data using various sensor types, including but not limited to cameras and/or Light Detection and Ranging (LiDAR) sensors, and radar elements disposed on the AV.

### BRIEF DESCRIPTION OF THE DRAWINGS

Certain features of the subject technology are set forth in the appended claims. However, the accompanying drawings, which are included to provide further understanding, illustrate disclosed aspects and together with the description serve to explain the principles of the subject technology. In the drawings:
FIG. 1 illustrates an example of a system for managing one or more Autonomous Vehicles (AVs) in accordance with some aspects of the present technology.
FIG. 2 illustrates a series of steps that may be performed by a processor of a sensing apparatus when false radar data points are identified.
FIG. 3 illustrates a series of steps that may be performed by the processor of the sensing apparatus when data associated with different types of sensing devices are evaluated to identify false radar data points.
FIG. 4 illustrates a set of objects in the view of a radar apparatus of an autonomous vehicle and radar blind spots that are caused by the presence of those objects.
FIG. 5 shows an example of computing system that may be used to implement at least some of the functions reviewed in the present disclosure in accordance with some aspects of the present technology.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a more thorough understanding of the subject technology. However, it will be clear and apparent that the subject technology is not limited to the specific details set forth herein and may be practiced without these details. In some instances, structures and components are shown in block diagram form in order to avoid obscuring the concepts of the subject technology.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

The present disclosure is directed to processing data associated with a non-radar type sensing device to identify data points associated with a radar type sensing device that are likely secondary radar reflections such that a processor of a sensing apparatus can direct processing resources to processing radar data that are associated with primary radar reflections. Primary reflections of a radar signal are reflections that are received after a transmitted radar signal bounces off an object directly back to the radar apparatus that transmitted the radar signal. Secondary reflections of a radar signal are reflections that are received after the transmitted radar signal bounces off two or more objects before being received back at the radar apparatus. Since radar apparatuses commonly identify an amount of elapsed time from when a radar signal is transmitted to when a reflection of that radar signal received, the receipt of secondary radar reflections may cause a processor of a sensing apparatus to identify that an object is located at a location when there is no object. Because of this, data associated with secondary reflections represent false data that can make a processor of a sensing apparatus make false determinations. Eliminating false radar data, therefore, can prevent a processor of a sensing apparats from performing unnecessary processing tasks and can help prevent that processor from making false determinations.

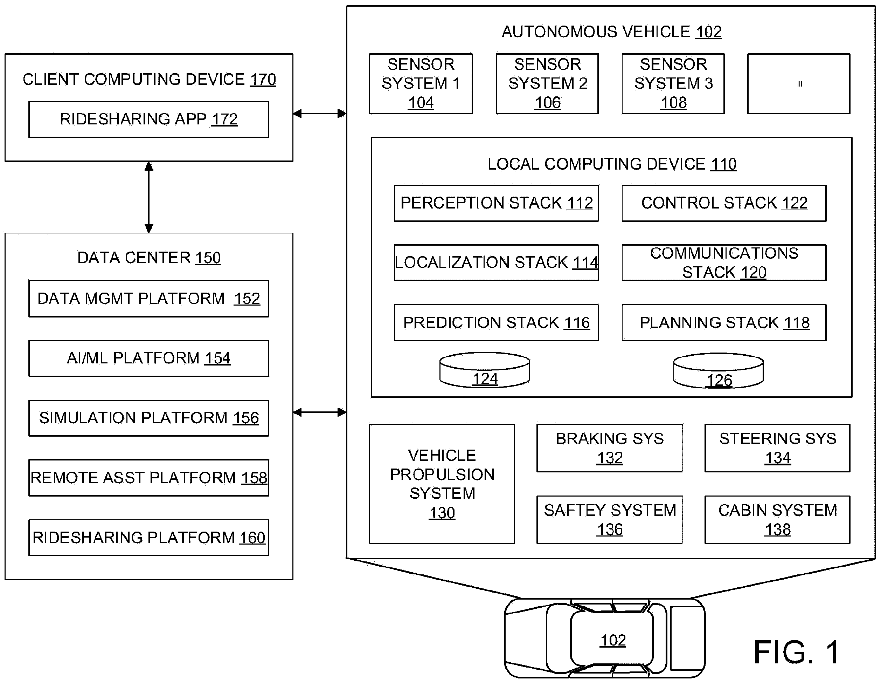

FIG. 1 illustrates an example of an AV management system 100. One of ordinary skill in the art will understand that, for the AV management system 100 and any system discussed in the present disclosure, there can be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

In this example, the AV management system 100 includes an AV 102, a data center 150, and a client computing device 170. The AV 102, the data center 150, and the client computing device 170 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 102 can navigate roadways without a human driver based on sensor signals generated by multiple sensor systems 104, 106, and 108. The sensor systems 104-108 can include different types of sensors and can be arranged about the AV 102. For instance, the sensor systems 104-108 can comprise Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 104 can be a camera system, the sensor system 106 can be a LIDAR system, and the sensor system 108 can be a RADAR system. Other embodiments may include any other number and type of sensors.

The AV 102 can also include several mechanical systems that can be used to maneuver or operate the AV 102. For instance, the mechanical systems can include a vehicle propulsion system 130, a braking system 132, a steering system 134, a safety system 136, and a cabin system 138, among other systems. The vehicle propulsion system 130 can include an electric motor, an internal combustion engine, or both. The braking system 132 can include an engine brake, brake pads, actuators, and/or any other suitable componentry configured to assist in decelerating the AV 102. The steering system 134 can include suitable componentry configured to control the direction of movement of the AV 102 during navigation. The safety system 136 can include lights and signal indicators, a parking brake, airbags, and so forth. The cabin system 138 can include cabin temperature control systems, in-cabin entertainment systems, and so forth. In some embodiments, the AV 102 might not include human driver actuators (e.g., steering wheel, handbrake, foot brake pedal, foot accelerator pedal, turn signal lever, window wipers, etc.) for controlling the AV 102. Instead, the cabin system 138 can include one or more client interfaces (e.g., Graphical User Interfaces (GUIs), Voice User Interfaces (VUls), etc.) for controlling certain aspects of the mechanical systems 130-138.

The AV 102 can additionally include a local computing device 110 that is in communication with the sensor systems 104-108, the mechanical systems 130-138, the data center 150, and the client computing device 170, among other systems. The local computing device 110 can include one or more processors and memory, including instructions that can be executed by the one or more processors. The instructions can make up one or more software stacks or components responsible for controlling the AV 102; communicating with the data center 150, the client computing device 170, and other systems; receiving inputs from riders, passengers, and other entities within the AV's environment; logging metrics collected by the sensor systems 104-108; and so forth. In this example, the local computing device 110 includes a perception stack 112, a mapping and localization stack 114, a prediction stack 116, a planning stack 118, a communications stack 120, a control stack 122, an AV operational database 124, and an HD geospatial database 126, among other stacks and systems.

The perception stack 112 can enable the AV 102 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 104-108, the mapping and localization stack 114, the HD geospatial database 126, other components of the AV, and other data sources (e.g., the data center 150, the client computing device 170, third party data sources, etc.). The perception stack 112 can detect and classify objects and determine their current locations, speeds, directions, and the like. In addition, the perception stack 112 can determine the free space around the AV 102 (e.g., to maintain a safe distance from other objects, change lanes, park the AV, etc.). The perception stack 112 can also identify environmental uncertainties, such as where to look for moving objects, flag areas that may be obscured or blocked from view, and so forth. In some embodiments, an output of the prediction stack can be a bounding area around a perceived object that can be associated with a semantic label that identifies the type of object that is within the bounding area, the kinematic of the object (information about its movement), a tracked path of the object, and a description of the pose of the object (its orientation or heading, etc.).

The mapping and localization stack 114 can determine the AV's position and orientation (pose) using different methods from multiple systems (e.g., GPS, IMUs, cameras, LIDAR, RADAR, ultrasonic sensors, the HD geospatial database 122, etc.). For example, in some embodiments, the AV 102 can compare sensor data captured in real-time by the sensor systems 104-108 to data in the HD geospatial database 126 to determine its precise (e.g., accurate to the order of a few centimeters or less) position and orientation. The AV 102 can focus its search based on sensor data from one or more first sensor systems (e.g., GPS) by matching sensor data from one or more second sensor systems (e.g., LIDAR). If the mapping and localization information from one system is unavailable, the AV 102 can use mapping and localization information from a redundant system and/or from remote data sources.

The prediction stack 116 can receive information from the localization stack 114 and objects identified by the perception stack 112 and predict a future path for the objects. In some embodiments, the prediction stack 116 can output several likely paths that an object is predicted to take along with a probability associated with each path. For each predicted path, the prediction stack 116 can also output a range of points along the path corresponding to a predicted location of the object along the path at future time intervals along with an expected error value for each of the points that indicates a probabilistic deviation from that point.

The planning stack 118 can determine how to maneuver or operate the AV 102 safely and efficiently in its environment. For example, the planning stack 116 can receive the location, speed, and direction of the AV 102, geospatial data, data regarding objects sharing the road with the AV 102 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 102 from one point to another and outputs from the perception stack 112, localization stack 114, and prediction stack 116. The planning stack 118 can determine multiple sets of one or more mechanical operations that the AV 102 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 118 can select from multiple backup plans to carry out. For example, while preparing to change lanes to turn right at an intersection, another vehicle may aggressively cut into the destination lane, making the lane change unsafe. The planning stack 118 could have already determined an alternative plan for such an event. Upon its occurrence, it could help direct the AV 102 to go around the block instead of blocking a current lane while waiting for an opening to change lanes.

The control stack 122 can manage the operation of the vehicle propulsion system 130, the braking system 132, the steering system 134, the safety system 136, and the cabin system 138. The control stack 122 can receive sensor signals from the sensor systems 104-108 as well as communicate with other stacks or components of the local computing device 110 or a remote system (e.g., the data center 150) to effectuate operation of the AV 102. For example, the control stack 122 can implement the final path or actions from the multiple paths or actions provided by the planning stack 118. This can involve turning the routes and decisions from the planning stack 118 into commands for the actuators that control the AV's steering, throttle, brake, and drive unit.

The communication stack 120 can transmit and receive signals between the various stacks and other components of the AV 102 and between the AV 102, the data center 150, the client computing device 170, and other remote systems. The communication stack 120 can enable the local computing device 110 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 120 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 126 can store HD maps and related data of the streets upon which the AV 102 travels. In some embodiments, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes; etc.). The traffic controls lane can include geospatial information of traffic signal lights, traffic signs, and other road objects and related attributes.

The AV operational database 124 can store raw AV data generated by the sensor systems 104-108, stacks 112 - 122, and other components of the AV 102 and/or data received by the AV 102 from remote systems (e.g., the data center 150, the client computing device 170, etc.). In some embodiments, the raw AV data can include HD LIDAR point cloud data, image data, RADAR data, GPS data, and other sensor data that the data center 150 can use for creating or updating AV geospatial data or for creating simulations of situations encountered by AV 102 for future testing or training of various machine learning algorithms that are incorporated in the local computing device 110.

The data center 150 can be a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and so forth. The data center 150 can include one or more computing devices remote to the local computing device 110 for managing a fleet of AVs and AV-related services. For example, in addition to managing the AV 102, the data center 150 may also support a ridesharing service, a delivery service, a remote/roadside assistance service, street services (e.g., street mapping, street patrol, street cleaning, street metering, parking reservation, etc.), and the like.

The data center 150 can send and receive various signals to and from the AV 102 and the client computing device 170. These signals can include sensor data captured by the sensor systems 104-108, roadside assistance requests, software updates, ridesharing pick-up and drop-off instructions, and so forth. In this example, the data center 150 includes a data management platform 152, an Artificial Intelligence/Machine Learning (AI/ML) platform 154, a simulation platform 156, a remote assistance platform 158, and a ridesharing platform 160, among other systems.

The data management platform 152 can be a "big data" system capable of receiving and transmitting data at high velocities (e.g., near real-time or real-time), processing a large variety of data and storing large volumes of data (e.g., terabytes, petabytes, or more of data). The varieties of data can include data having different structured (e.g., structured, semistructured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 150 can access data stored by the data management platform 152 to provide their respective services.

The AI/ML platform 154 can provide the infrastructure for training and evaluating machine learning algorithms for operating the AV 102, the simulation platform 156, the remote assistance platform 158, the ridesharing platform 160, the cartography platform 162, and other platforms and systems. Using the AI/ML platform 154, data scientists can prepare data sets from the data management platform 152; select, design, and train machine learning models; evaluate, refine, and deploy the models; maintain, monitor, and retrain the models; and so on.

The simulation platform 156 can enable testing and validation of the algorithms, machine learning models, neural networks, and other development efforts for the AV 102, the remote assistance platform 158, the ridesharing platform 160, the cartography platform 162, and other platforms and systems. The simulation platform 156 can replicate a variety of driving environments and/or reproduce real-world scenarios from data captured by the AV 102, including rendering geospatial information and road infrastructure (e.g., streets, lanes, crosswalks, traffic lights, stop signs, etc.) obtained from the cartography platform 162; modeling the behavior of other vehicles, bicycles, pedestrians, and other dynamic elements; simulating inclement weather conditions, different traffic scenarios; and so on.

The remote assistance platform 158 can generate and transmit instructions regarding the operation of the AV 102. For example, in response to an output of the AI/ML platform 154 or other system of the data center 150, the remote assistance platform 158 can prepare instructions for one or more stacks or other components of the AV 102.

The ridesharing platform 160 can interact with a customer of a ridesharing service via a ridesharing application 172 executing on the client computing device 170. The client computing device 170 can be any type of computing system, including a server, desktop computer, laptop, tablet, smartphone, smart wearable device (e.g., smartwatch, smart eyeglasses or other Head-Mounted Display (HMD), smart ear pods, or other smart in-ear, on-ear, or over-ear device, etc.), gaming system, or other general purpose computing device for accessing the ridesharing application 172. The client computing device 170 can be a customer's mobile computing device or a computing device integrated with the AV 102 (e.g., the local computing device 110). The ridesharing platform 160 can receive requests to pick up or drop off from the ridesharing application 172 and dispatch the AV 102 for the trip.

Methods of the present disclosure may separate an area around the radar apparatus into a grid pattern that includes a plurality of cells. Objects tracked by one type of sensing apparatus (e.g. a camera and/or LiDAR apparatus) may be associated with particular cells of the grid and a processor that processes radar signal data may only process radar signals associated with the particular cells of the grid.

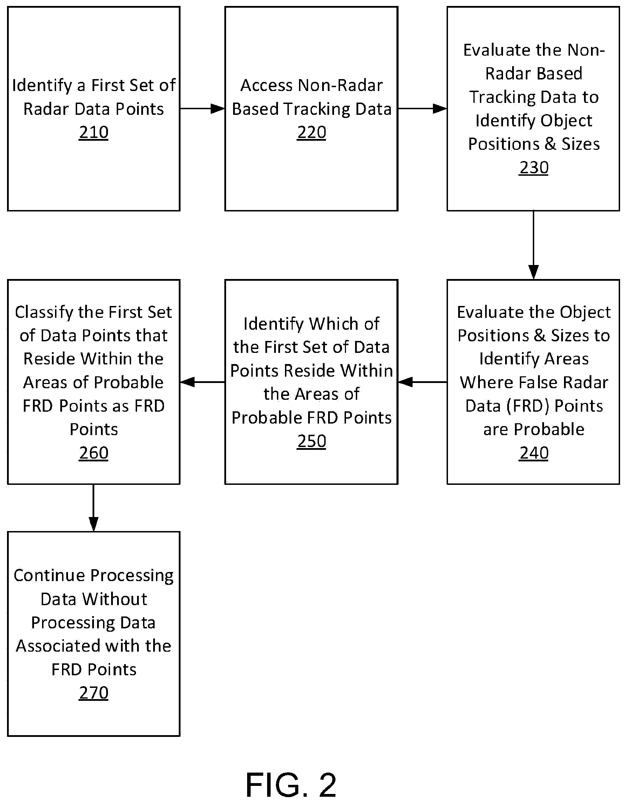

FIG. 2 illustrates a series of steps that may be performed by a processor of a sensing apparatus when false radar data points are identified. The steps of FIG. 2 may be performed by a processor that executes instructions out of a memory. Step 210 of FIG. 2 is a step where the processor may identify a first set of radar points of a currently received radar signal. This first set of radar points may be identified after a radar apparatus at a sensing apparatus transmits radar signals and receives radar signals that were reflected off objects near an automated vehicle (AV).

Step 210 may be performed after received radar signals have been amplified, filtered, and digitized using a combination of analog and digital components. An analog to digital converter (ADC) may be used to convert analog signals into digital data that may be evaluated by the processor executing instructions out of the memory. Next in step 220, the processor may access non-radar-based tracking data. This non-radar-based tracking data may be data generated based on the receipt of camera images or reflected LiDAR signals and this tracking data may identify positions of objects over a span of time that is greater than an amount of time used to transmit several sets of radar signals by the radar apparatus.

The non-radar-based tracking data may then be evaluated to identify objects and sizes of those objects in step 230 of FIG. 2. Step 230 may also identify types of objects, whether they be a car, a truck, a wall, a bicycle, a pedestrian, or other objects. Sizes of objects may correspond to a height or a width of an object. The sizes of objects in front a sensing apparatus may block radar signals from being received from certain areas in front of the sensing apparatus. This means that objects in front of a vehicle may create a radar blind spot. This radar blind spot may correspond to an area shadowed from radar signals transmitted from a radar apparatus. Because of this, radar data points associated with a radar blind spot may be considered as having a high probability of being a false radar data points.

In step 240, the processor may make an evaluation that identifies an area of a blind spot. Radar signal points identified in step 210 that overlap (i.e. are contained within) an area of a blind spot may be identified in step 250 of FIG. 2. These points that are contained within the area of a blind spot may then be classified as false radar detection points in step 260. The processor of the sensing apparatus may then ignore any radar data that has been classified as being associated with the false radar detection points when the processor of the sensing apparatus performs other tasks in step 270 of FIG. 2.

In certain instances, a set of points that appear to be associated with a false (or virtual) object located in and around a radar blind spot may be grouped (clustered) with points that are within the area of the radar blind spot. Here, a first number of these grouped (clustered) points within the radar blind spot may be compared to a second number of the grouped points that are located outside of the radar blind spot. When a ratio of the first number of grouped points divided by the second number of grouped points is less than a threshold value, all of the grouped points may be classified as being false radar detection points. One reason why some data points of an apparent false (virtual) object may be located outside of the radar blind spot may be the result of the processor not properly identifying the size of that radar blind spot. In an example, when the number of radar points within a blind spot equals 20 and number of radar points near, yet outside of that blind spot equal 10, twenty divided by 10 would result in a ratio of 20/10 (or a value 0.50). When a threshold used to identify whether the number of points outside the radar blind spot is set at a 0.66, all of the 30 points of radar data in and near the radar blind spot may be considered as false radar data points.

The removal of false data points from a data is a form of filtering that may allow a sensing apparatus to evaluate data associated with known objects. This would allow a processor to perform functions of a sensing apparatus more efficiently. False data points may be identified by identifying geometric relationships. Here a processor may execute instructions out of a memory to identify geometric relationships between radar data points. Here the processor may execute instructions to evaluate Based on the geometric relation, the multi-bouncing filter will consider a first point (PV) as a point belonging to a virtual object (i.e. a virtual point) when there is a second point (PR) that belongs to a real object. When an azimuth of the first point (PV) is within a threshold arc distance of an azimuth of the second point (Pr), ranges associated with points may be identified. When a range of the first point (PV-R) is within a within a threshold distance of a range of the second point (PR-R) times an number K (e.g., an integer greater than or equal to 2), range-rates of the first point (PV-RR) and the second point (PR-RR) may be evaluated. These range rates may also be related to a threshold difference in range-rates of the first point the first point (PV-RR) and the second point (PR-RR) time the integer K. An expected range rate of the second point (PR) may also be calculated from tracked object data in order to further check and reduce mis-identifying a real object data point as a false object data point. This has been shown to improve operation of a false radar data point detection process.

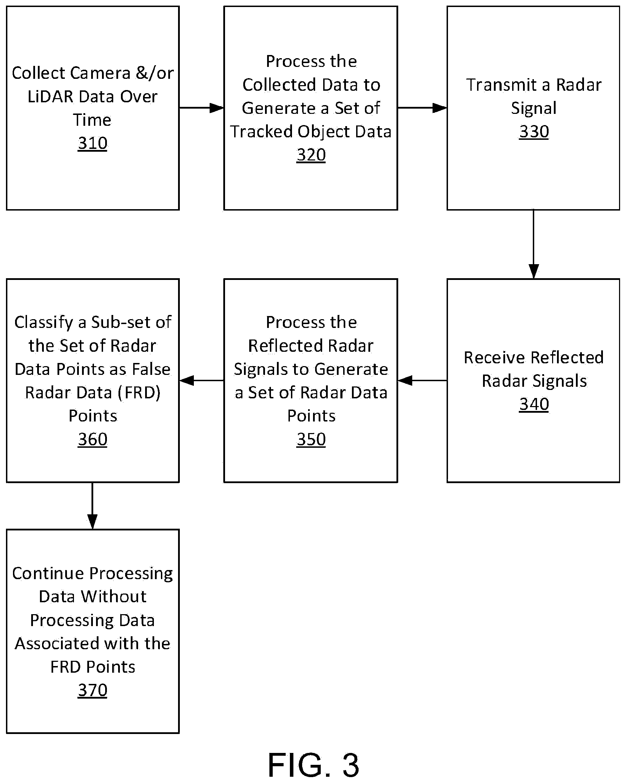

FIG. 3 illustrates a series of steps that may be performed by the processor of the sensing apparatus when data associated with different types of sensing devices are evaluated to identify false radar data points. FIG. 3 begins with step 310 where sets of non-radar (e.g. camera and/or LiDAR) data are collected over time. This data may then be processed and used to track various objects around a sensing apparatus of an automated vehicle (AV) in step 320. Next in step 330, a radar signal may be transmitted from a radar device at the sensing apparatus of the AV after which reflected radar signals may be received in step 340 of FIG. 3. Some of the reflected radar signals received in step 340 may have been received immediately after they were reflected off an object (primary reflections) or some of these reflected radar signals may have been received after they were reflected off several objects (secondary reflections or echoes of a primary reflection).

Next in step 350, the received radar signals may be processed (amplified, filtered, and converted to digital data) when a set of radar data points are generated from the reflected radar signals. A sub-set of the set of radar data points may then be classified as false radar data points in step 360 as discussed in respect to FIG. 2. The processor of the sensing apparatus may then ignore any radar data that has been classified as being associated with the false radar detection points when the processor of the sensing apparatus performs other tasks in step 370 of FIG. 3.

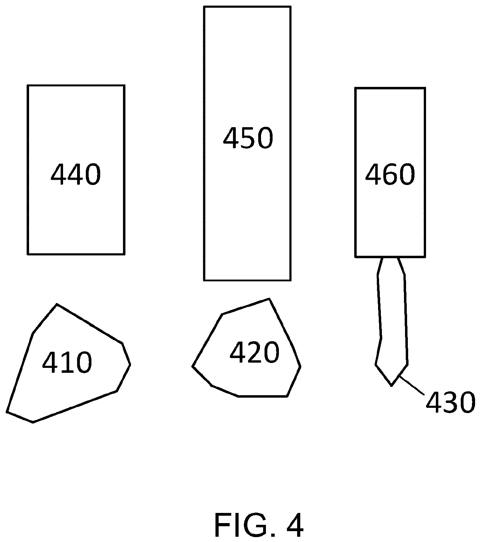

FIG. 4 illustrates a set of objects in the view of a radar apparatus of an autonomous vehicle and radar blind spots that are caused by the presence of those objects. Items 410, 420, and 430 of FIG. 4 may be objects viewed by a radar device. These objects may have a shape such as the shapes of items 410, 420, and 430 that are interpreted from the radar data discussed in respect to FIGS 2 & 3. Items 440, 450, and 460 of FIG. 4 may be areas that have been identified as radar blind spots (areas shadowed from the radar signals emitted by the radar apparatus). The size of these blind spots or shadowed areas may vary with the size of an object. A larger an object will typically be associated with a bigger blind spot than a smaller object. For example, a high truck may have a larger blind spot than a car that has a lower profile than the truck. The size of the blind spots may correspond to an area that blocks light as well as radar signals. For example, a high truck may make have a blind spot that blocks objects in front of an AV sensing apparatus from radar signals.

The blind spots 440, 450, and 460 may have been generated by the processor making evaluations of received camera or LiDAR data. Here the size of part of a vehicle (e.g. a bumper), a type vehicle (e.g. bicycle, car, or truck), or a set of dimensions (height and/or width) may be used to identify the size of a blind spot. Since a distance associated with a particular radar signal corresponds to a time when a reflected radar signal is received as compared to when that reflected radar signal was transmitted, time and orientation may be used to identify whether a particular radar signal data point appears in a blind spot.

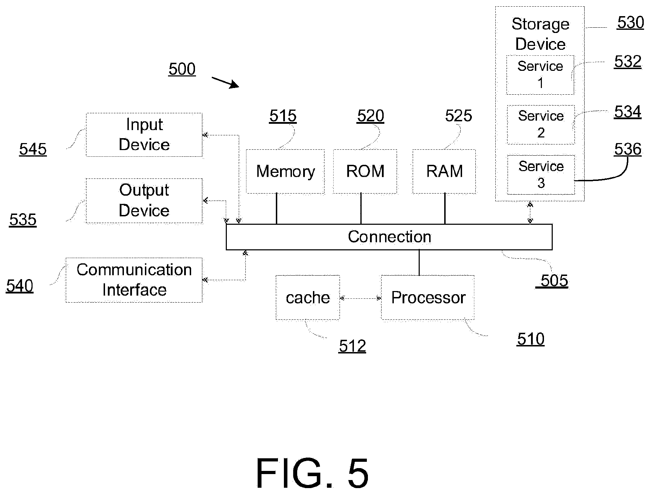

FIG. 5 shows an example of computing system 500 that may be used to implement at least some of the functions reviewed in the present disclosure. In certain instances, a computing device may be incorporated into a sensing apparatus or any component thereof in which the components of the system are in communication with each other using connection 505. Connection 505 can be a physical connection via a bus, or a direct connection into processor 510, such as in a chipset architecture. Connection 505 can also be a virtual connection, networked connection, or logical connection.

In some embodiments, computing system 500 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 500 includes at least one processing unit (CPU or processor) 510 and connection 505 that couples various system components including system memory 515, such as read-only memory (ROM) 520 and random access memory (RAM) 525 to processor 510. Computing system 500 can include a cache of high-speed memory 512 connected directly with, in close proximity to, or integrated as part of processor 510.

Processor 510 can include any general purpose processor and a hardware service or software service, such as services 542, 534, and 536 stored in storage device 530, configured to control processor 510 as well as a special-purpose processor where software instructions are incorporated into the actual processor design. Processor 510 may essentially be a completely self-contained computing system, containing multiple cores or processors, a bus, memory controller, cache, etc. A multi-core processor may be symmetric or asymmetric.

To enable user interaction, computing system 500 includes an input device 545, which can represent any number of input mechanisms, such as a microphone for speech, a touch-sensitive screen for gesture or graphical input, keyboard, mouse, motion input, speech, etc. Computing system 500 can also include output device 535, which can be one or more of a number of output mechanisms known to those of skill in the art. In some instances, multimodal systems can enable a user to provide multiple types of input/output to communicate with computing system 500. Computing system 500 can include communications interface 540, which can generally govern and manage the user input and system output. There is no restriction on operating on any particular hardware arrangement, and therefore the basic features here may easily be substituted for improved hardware or firmware arrangements as they are developed.

Storage device 530 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 530 can include software services, servers, services, etc., that when the code that defines such software is executed by the processor 510, it causes the system to perform a function. In some embodiments, a hardware service that performs a particular function can include the software component stored in a computer-readable medium in connection with the necessary hardware components, such as processor 510, connection 505, output device 535, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general-purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

### NUMBERED STATEMENTS OF THE INVENTION

1. A method comprising:
   identifying a first set of radar data points associated with a currently received radar signal, the first set of radar data points including false radar data points and actual radar data points, wherein the actual radar data points are associated with current locations of a set of objects;
   accessing data associated with a non-radar-based sending device that includes a set of non-radar data points associated with positions sizes of each object of the set of objects;
   evaluating the non-radar-based data to identify a position and a size to associate with each of the objects of the set of objects;
   evaluating the position and the size of each the objects of the set of objects to identify areas to associate with probable false radar data points;
   identifying which of the first set of radar points reside within the areas associated with the probable false radar data points; and
   classifying the first set of radar data points that reside within the areas associated with the probable false radar points as the false radar data points, wherein further evaluations of the first set of radar data points do not include processing data associated with the false radar data points.
2. The method of statement 1, wherein the non-radar-based data is associated with at least one of a camera sensing device or a light detecting and ranging (LiDAR) sensing device.
3. The method of statement 1, further comprising:
   transmitting a radar signal;
   receiving reflected radar signals after the transmitted radar signal bounced off one or more objects of the set of objects; and
   generating the first set of radar data from information associated with the reflected radar signals.
4. The method of statement 1, further comprising:
   capturing images of the set of objects; and
   evaluating the captured images to identify the position and the size to associate with each of the objects of the set of objects.
5. The method of statement 1, further comprising:
   transmitting light detecting and ranging (LiDAR) signals;
   receiving reflected LiDAR signals after the transmitted LiDAR signals bounced off of one or more objects of the set of objects; and
   generating the set of non-radar-based data from information associated with the reflected LiDAR signals.
6. The method of statement 1, further comprising:
   identifying a radar shadow zone to associate with at least one area of the areas associated with the probable false radar data points based on a size of an object of the set of objects.
7. The method of statement 6, further comprising:
   clustering a group of the of first set of radar points into a second set of radar points based on the group of the first set of radar points being associated with the at least one area, wherein a first number of the second set of radar points are located within the radar shadow zone and a second number of the second set of radar points are located outside of the radar shadow zone; calculating a ratio by dividing the first number of the second set of radar points by the second number of radar points; and
   identifying that the second set of radar points should be classified as some of the false radar data points based on the ratio being greater than a threshold value.
8. A non-transitory computer-readable storage medium having embodied thereon a program executable by a processor executing instructions out of a memory to perform a method comprising:
   identifying a first set of radar data points associated with a currently received radar signal, the first set of radar data points including false radar data points and actual radar data points, wherein the actual radar data points are associated with current locations of a set of objects;
   accessing data associated with a non-radar-based sending device that includes a set of non-radar data points associated with positions sizes of each object of the set of objects;
   evaluating the non-radar-based data to identify a position and a size to associate with each of the objects of the set of objects;
   evaluating the position and the size of each the objects of the set of objects to identify areas to associate with probable false radar data points;
   identifying which of the first set of radar points reside within the areas associated with the probable false radar data points; and
   classifying the first set of radar data points that reside within the areas associated with the probable false radar points as the false radar data points, wherein further evaluations of the first set of radar data points do not include processing data associated with the false radar data points.
9. The non-transitory computer-readable storage medium of statement 8, wherein the non-radar-based data is associated with at least one of a camera sensing device or a light detecting and ranging (LiDAR) sensing device.
10. The non-transitory computer-readable storage medium of statement 8, the processor executing further instructions out of the memory to:
   allow the transmission of a radar signal;
   prepare to process received reflected radar signals after the transmitted radar signal bounced off one or more objects of the set of objects; and
   generate the first set of radar data from information associated with the reflected radar signals.
11. The non-transitory computer-readable storage medium of statement 8, the processor executing further instructions out of the memory to:
   access capture images of the set of objects; and
   evaluate the captured images to identify the position and the size to associate with each of the objects of the set of objects.
12. The non-transitory computer-readable storage medium of statement 8, the processor executing further instructions out of the memory to:
   allow the transmission light detecting and ranging (LiDAR) signals;
   prepare to process received reflected LiDAR signals after the transmitted LiDAR signals bounced off of one or more objects of the set of objects; and
   generate the set of non-radar-based data from information associated with the reflected LiDAR signals.
13. The non-transitory computer-readable storage medium of statement 8, the processor executing further instructions out of the memory to:
   identify a radar shadow zone to associate with at least one area of the areas associated with the probable false radar data points based on a size of an object of the set of objects.
14. The non-transitory computer-readable storage medium of statement 13, the processor executing further instructions out of the memory to:
   cluster a group of the of first set of radar points into a second set of radar points based on the group of the first set of radar points being associated with the at least one area, wherein a first number of the second set of radar points are located within the radar shadow zone and a second number of the second set of radar points are located outside of the radar shadow zone; and
   calculate a ratio by dividing the first number of the second set of radar points by the second number of radar points;
   identify that the second set of radar points should be classified as some of the false radar data points based on the ratio being greater than a threshold value.
15. An apparatus comprising:
   a memory; and
   a processor that executes instructions out of a memory to:
      identify a first set of radar data points associated with a currently received radar signal, the first set of radar data points including false radar data points and actual radar data points, wherein the actual radar data points are associated with current locations of a set of objects;
      access data associated with a non-radar-based sending device that includes a set of non-radar data points associated with positions sizes of each object of the set of objects;
      evaluate the non-radar-based data to identify a position and a size to associate with each of the objects of the set of objects;
      evaluate the position and the size of each the objects of the set of objects to identify areas to associate with probable false radar data points;
      identify which of the first set of radar points reside within the areas associated with the probable false radar data points; and
      classify the first set of radar data points that reside within the areas associated with the probable false radar points as the false radar data points, wherein further evaluations of the first set of radar data points do not include processing data associated with the false radar data points.
16. The apparatus of statement 15, wherein the non-radar-based data is associated with at least one of a camera sensing device or a light detecting and ranging (LiDAR) sensing device.
17. The apparatus of statement 15, further comprising:
   a radar device that:
   transmits a radar signal, and
   receives reflected radar signals after the transmitted radar signal bounced off one or more objects of the set of objects, wherein the processor executes the instructions out of the memory to generate the first set of radar data from information associated with the reflected radar signals.
18. The apparatus of statement 15, further comprising: a camera that captures images of the set of objects, wherein the processor executes the instructions out of the memory to evaluating the captured images to identify the position and the size to associate with each of the objects of the set of objects.
19. The apparatus of statement 15, further comprising:
   a light detecting and ranging (LiDAR) that:
   transmits light detecting and ranging (LiDAR) signals, and
   receives reflected LiDAR signals after the transmitted LiDAR signals bounced off of one or more objects of the set of objects, wherein the processor executes the instructions out of the memory to generate the set of non-radar-based data from information associated with the reflected LiDAR signals.
20. The apparatus of statement 15, the processor executes the instructions out of the memory to:
   identify a radar shadow zone to associate with at least one area of the areas associated with the probable false radar data points based on a size of an object of the set of objects.

## Claims

1. A method comprising:
identifying a first set of radar data points associated with a currently received radar signal, the first set of radar data points including false radar data points and actual radar data points, wherein the actual radar data points are associated with current locations of a set of obj ects;
accessing data associated with a non-radar-based sending device that includes a set of non-radar data points associated with positions sizes of each object of the set of objects;
evaluating the non-radar-based data to identify a position and a size to associate with each of the objects of the set of objects;
evaluating the position and the size of each the objects of the set of objects to identify areas to associate with probable false radar data points;
identifying which of the first set of radar points reside within the areas associated with the probable false radar data points; and
classifying the first set of radar data points that reside within the areas associated with the probable false radar points as the false radar data points, wherein further evaluations of the first set of radar data points do not include processing data associated with the false radar data points.

2. The method of claim 1, wherein the non-radar-based data is associated with at least one of a camera sensing device or a light detecting and ranging (LiDAR) sensing device.

3. The method of claim 1, further comprising:
transmitting a radar signal;
receiving reflected radar signals after the transmitted radar signal bounced off one or more objects of the set of objects; and
generating the first set of radar data from information associated with the reflected radar signals.

4. The method of claim 1, further comprising:
capturing images of the set of objects; and
evaluating the captured images to identify the position and the size to associate with each of the objects of the set of objects.

5. The method of claim 1, further comprising:
transmitting light detecting and ranging (LiDAR) signals;
receiving reflected LiDAR signals after the transmitted LiDAR signals bounced off of one or more objects of the set of objects; and
generating the set of non-radar-based data from information associated with the reflected LiDAR signals.

6. The method of claim 1, further comprising:
identifying a radar shadow zone to associate with at least one area of the areas associated with the probable false radar data points based on a size of an object of the set of obj ects.

7. The method of claim 6, further comprising:
clustering a group of the of first set of radar points into a second set of radar points based on the group of the first set of radar points being associated with the at least one area, wherein a first number of the second set of radar points are located within the radar shadow zone and a second number of the second set of radar points are located outside of the radar shadow zone;
calculating a ratio by dividing the first number of the second set of radar points by the second number of radar points; and
identifying that the second set of radar points should be classified as some of the false radar data points based on the ratio being greater than a threshold value.

8. A computer-readable medium having comprising a program executable by a processor executing instructions out of a memory to perform the method of any of claim 1 to 7.

9. The non-transitory computer-readable storage medium of claim 8, the processor executing further instructions out of the memory to:
allow the transmission of a radar signal;
prepare to process received reflected radar signals after the transmitted radar signal bounced off one or more objects of the set of objects; and
generate the first set of radar data from information associated with the reflected radar signals.

10. The non-transitory computer-readable storage medium of claim 8, the processor executing further instructions out of the memory to:
access capture images of the set of objects; and
evaluate the captured images to identify the position and the size to associate with each of the objects of the set of objects.

11. The non-transitory computer-readable storage medium of claim 8, the processor executing further instructions out of the memory to:
allow the transmission light detecting and ranging (LiDAR) signals;
prepare to process received reflected LiDAR signals after the transmitted LiDAR signals bounced off of one or more objects of the set of objects; and
generate the set of non-radar-based data from information associated with the reflected LiDAR signals.

12. An apparatus comprising:
a memory; and
a processor that executes instructions out of a memory to:
perform the method of any of claims 1 to 8.

13. The apparatus of claim 12, further comprising:
a radar device that:
transmits a radar signal, and
receives reflected radar signals after the transmitted radar signal bounced off one or more objects of the set of objects, wherein the processor executes the instructions out of the memory to generate the first set of radar data from information associated with the reflected radar signals.

14. The apparatus of claim 12 or 13, further comprising:
a camera that captures images of the set of objects, wherein the processor executes the instructions out of the memory to evaluating the captured images to identify the position and the size to associate with each of the objects of the set of objects.

15. The apparatus of claim 12, 13 or 14, further comprising:
a light detecting and ranging (LiDAR) that:
transmits light detecting and ranging (LiDAR) signals, and
receives reflected LiDAR signals after the transmitted LiDAR signals bounced off of one or more objects of the set of objects, wherein the processor executes the instructions out of the memory to generate the set of non-radar-based data from information associated with the reflected LiDAR signals.
